# DEMANDE DE BREVET EUROPEEN

(11) **EP 0 907 267 A1**
(43) Date de publication de la demande: **07.04.1999**
(21) Numéro de dépôt: 98402414.1
(22) Date de dépôt: 01.10.1998
(51) Int. Cl.: H04J 14/02

(54) **Procédé de compensation pour liaison de transmission optique par fibre et terminaux de liaison appliquant ce procédé**

(30) Priorité: 02.10.1997 FR 9712262
(71) Demandeur: ALCATEL, 75008 Paris (FR)
(72) Inventeur: Gautheron, Olivier, 78960 Voisin le Bretonneux (FR); Letellier, Vincent, 75013 Paris (FR)
(74) Mandataire: Lamoureux, Bernard

(57) **Abrégé**

Procédé pour compenser les altérations venant affecter au cours du temps les caractéristiques de puissance d'une liaison de transmission par fibre optique véhiculant des signaux de communication par l'intermédiaire d'une pluralité d'ondes optiques porteuses multiplexées en longueur d'onde dont les longueurs d'onde sont échelonnées. Il prévoit au moins une onde optique porteuse de secours dont la longueur d'onde est au delà de la zone délimitée par les deux longueurs d'onde extrêmes de la pluralité du même côté que l'une de ces deux longueurs d'onde extrêmes.

L'invention concerne aussi les terminaux de liaison (T1, T2) permettant la mise en oeuvre de ce procédé.

## Description

L'invention concerne un procédé de compensation pour liaison de transmission optique par fibre et les terminaux de liaison appliquant ce procédé.

Celui-ci est plus particulièrement destiné à compenser les altérations venant affecter au cours du temps les caractéristiques et notamment les caractéristiques de puissance d'une liaison de transmission par fibre optique véhiculant des signaux de communication par l'intermédiaire d'une pluralité d'ondes porteuses multiplexées en longueur d'onde. Il est plus particulièrement destiné à être appliqué à des liaisons de très grande longueur comme le sont notamment les liaisons sous-marines des réseaux internationaux.

Comme il est connu, une liaison optique dite WDM, telle que sommairement définie ci-dessus, permet de transmettre simultanément une pluralité de signaux de communication qui sont répartis sur plusieurs ondes optiques porteuses que ces signaux modulent, ces ondes porteuses ayant des longueurs d'onde fixes suffisamment voisines pour pouvoir être simultanément transmises par un même conducteur optique.

Comme il est également connu, les ondes optiques de longueurs d'onde déterminées voisines qui sont injectées par un équipement émetteur d'un terminal placé à une extrémité d'une liaison subissent des affaiblissements différents en cours de transmission. Les ondes dont les longueurs d'onde sont situées aux extrémités de la bande exploitée par un équipement émetteur pour une liaison donnée sont plus atténuées que les ondes ayant des longueurs proches du centre de cette bande.

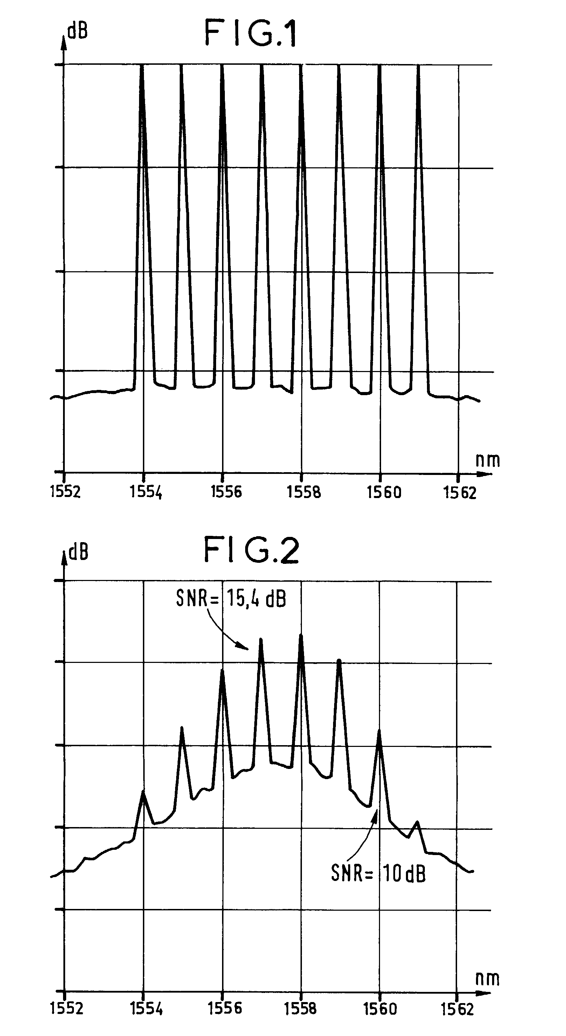

La figure 1 présente, à titre d'exemple non limitatif, des ondes optiques produites avec un même niveau de puissance par un équipement émetteur pour une liaison WDM qui comporte des répéteurs et qui transmet simultanément des signaux répartis sur huit ondes optiques dont les longueurs d'onde s'échelonnent dans une bande comprise entre 1554 nm et 1561 nm. Cette figure 2 présente les niveaux de puissance obtenus pour ces ondes au niveau de l'équipement récepteur situé à l'autre extrémité de la liaison. La figure 2 montre que l'affaiblissement est sélectif et augmente depuis la partie centrale de bande vers les extrémités de bande. Le rapport signal sur bruit SNR obtenu pour la longueur d'onde 1557 nm en zone centrale est par exemple de 15,4 dB, alors que le rapport signal sur bruit SNR obtenu pour la longueurs d'onde 1560 nm en zone d'extrémité n'est que de 10 dB.

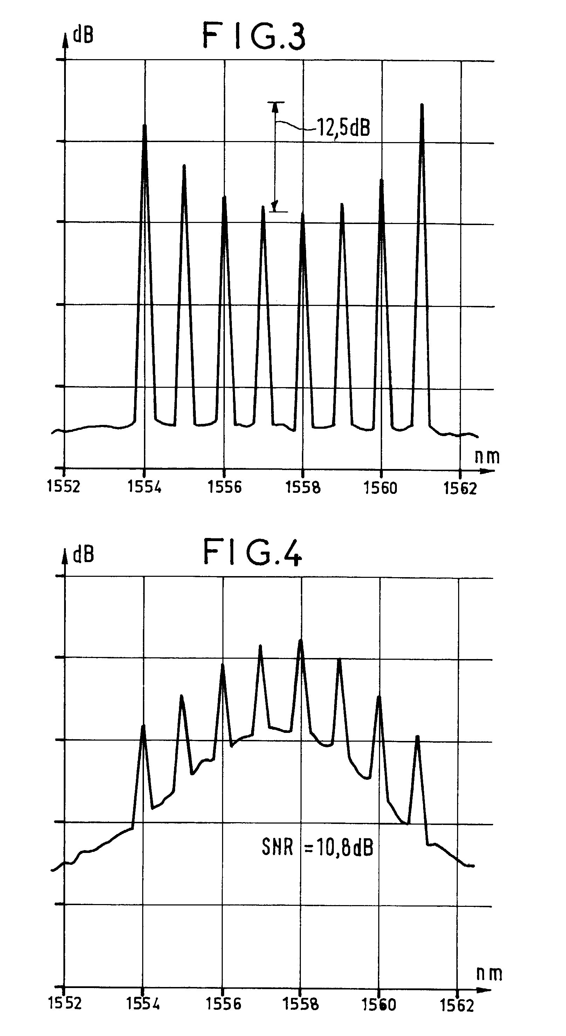

Il est donc connu de corriger cet affaiblissement sélectif, croissant pour les longueurs d'onde situées vers les extrémités de la bande exploitée, par une préaccentuation sélective plus importante pour ces longueurs d'onde que pour les longueurs d'onde situées dans la partie centrale de bande. Les figures 3 et 4 illustrent respectivement, à titre d'exemple non limitatif les niveaux respectifs de puissance des ondes optiques préaccentuées qui sont appliqués par un équipement émetteur à une liaison WDM telle que celle envisagée ci-dessus et les niveaux de puissance obtenus au niveau de l'équipement récepteur. Il est alors obtenu un même niveau de rapport signal sur bruit SNR pour toutes les longueurs d'onde exploitées dans la bande considéré par exemple un niveau de 10,8 dB en réception à partir de niveaux de puissance à l'émission correspondant à un affaiblissement du niveau puissance de 12,5 dB entre les ondes en extrémité de bande et celles situées au centre, soit ici entre les ondes de longueur d'onde de 1554 et 1561 nm et celles dont les longueurs d'onde sont de 1557 et 1558 nm.

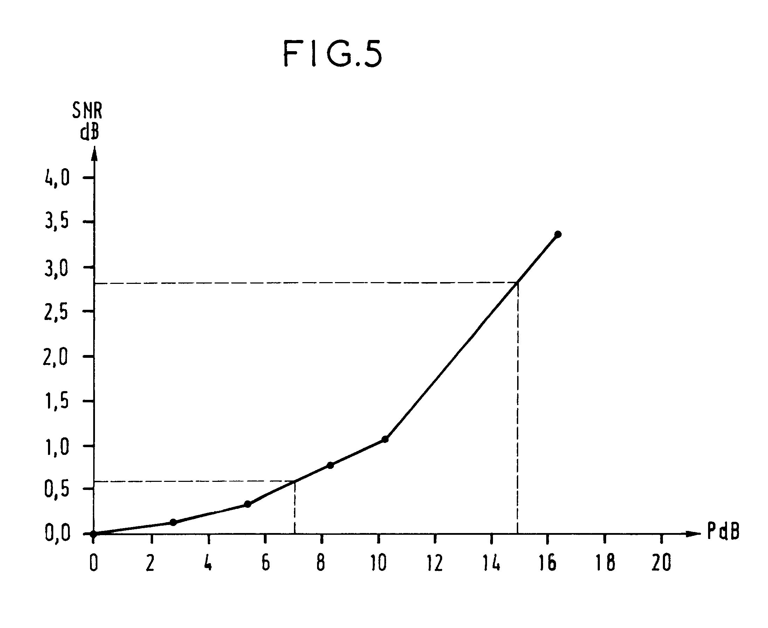

Toutefois cette préaccentuation sélective doit rester limitée dans la mesure où elle entraîne une dégradation du rapport signal sur bruit, comme le montre la figure 5. Dans l'exemple non limitatif proposé, le niveau de dégradation du rapport signal sur bruit n'est faible que pour des préaccentuations limitées.

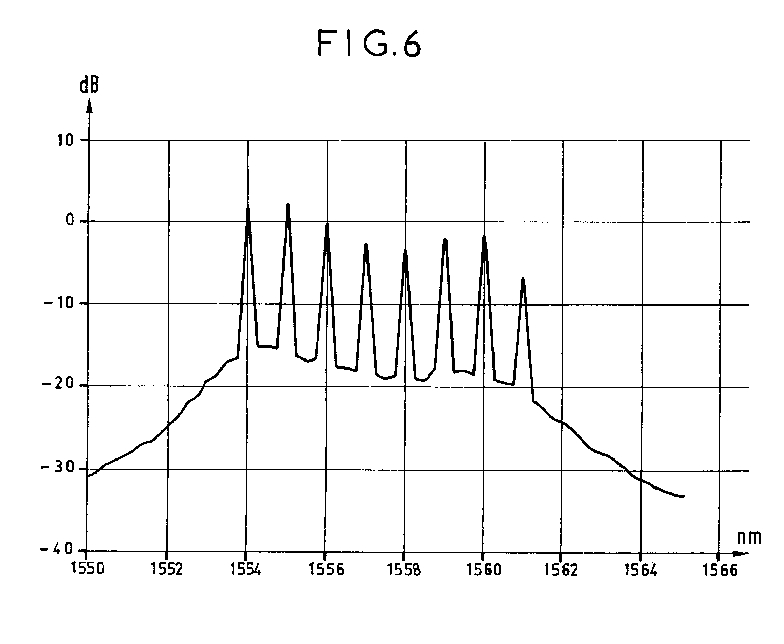

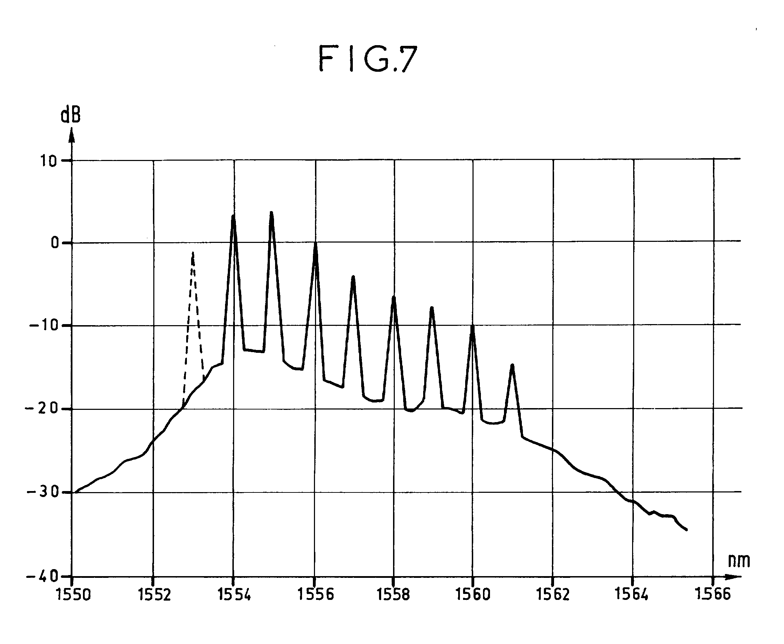

Or il faut aussi tenir compte des phénomènes dus au vieillissement qui affectent les divers éléments mis en oeuvre pour exploiter une liaison WDM comme permettent de le constater les diagrammes respectivement présentés sur les figures 6 et 7. Ce vieillissement se traduit notamment par des augmentations des pertes dues à l'augmentation de l'atténuation propre à la fibre optique au long de la liaison, aux altérations qui affectent les différents organes tels que les filtres et amplificateurs que comporte l'ensemble formé par la liaison et les équipements émetteurs et récepteurs qui la desservent et aux éventuelles réparations, notamment par substitution de tronçons de liaison.

Globalement le gain des amplificateurs optiques et les caractéristiques spectrales du gain vont augmenter. En règle générale, le gain va s'accroître plus vite pour les longueurs d'onde les plus basses de la bande de longueurs d'onde qui est exploitée. Ceci est illustré sur les figures 6 et 7 relatives à une même liaison WDM où l'on voit l'évolution des répartitions de puissances déterminées, initialement pour la figure 6 et après un certain vieillissement par simulation sur la figure 7, pour les différentes longueurs d'onde. Il a été supposé sur ces figures que le vieillissement intègre un décalage de 0,25 nm du filtre prévu pour réduire les effets dus à la préaccentuation mise en oeuvre.

La différence entre le rapport signal sur bruit SNR pour une des ondes optiques ayant les plus hautes puissances et celui d'une onde de longueur d'onde plus élevée qui a la puissance la plus faible correspond par exemple initialement à 4,5 dB, comme le montre la figure 6 si l'on prend en compte les ondes dont les longueurs sont de 1555 et 1561 nm. Cette différence a été déterminée comme atteignant 11 dB après vieillissement simulé comme le montre la figure 7.

Il n'est pas possible d'agir sur la préaccentuation pour compenser efficacement les effets du vieillissement pour la raison évoquée en liaison avec la figure 5. Une solution théoriquement possible serait de modifier l'accord des filtres répartis sur la longueur de la liaison, toutefois les moyens permettant de mettre en oeuvre une telle solution n'ont apparemment pas été trouvés.

L'invention propose donc un procédé pour compenser les altérations venant affecter au cours du temps les caractéristiques et notamment les caractéristiques de puissance d'une liaison de transmission par fibre optique véhiculant des signaux de communication par l'intermédiaire d'une pluralité d'ondes porteuses multiplexées en longueur d'onde, dont les longueurs d'onde respectives sont échelonnées entre deux extrêmes d'entre elles.

Selon une caractéristique de l'invention, le procédé prévoit la possibilité de mise en oeuvre d'au moins une onde optique porteuse de secours dont la longueur d'onde est au delà de la zone délimitée par les dites longueurs d'onde extrêmes du même côté que l'une de ces deux longueurs d'onde extrêmes pour pouvoir se substituer à l'autre de ces deux longueurs d'onde extrêmes.

L'invention propose aussi un terminal de liaison de transmission optique par fibre véhiculant des signaux de communication par l'intermédiaire d'une pluralité d'ondes porteuses multiplexées en longueur d'onde dont les longueurs d'onde sont échelonnées entre deux extrêmes d'entre elles, ledit terminal comportant un équipement d'émission doté de moyens pour générer les ondes porteuses de ladite pluralité, de moyens pour moduler chacune de ces ondes porteuses par des signaux de communication et de moyens pour injecter chacune des ondes porteuses modulées dans la fibre.

Selon une caractéristique de l'invention, les moyens pour générer les ondes porteuses sont équipés pour générer au moins une onde porteuse supplémentaire dont la longueur d'onde se situe delà de la zone délimitée par les dites longueurs d'onde extrêmes de la pluralité du même côté que l'une de ces deux longueurs d'onde extrêmes pour permettre que cette onde porteuse supplémentaire puisse être substituée à l'autre de ces deux longueurs d'onde extrêmes, les moyens pour moduler les ondes porteuses sont équipés pour moduler l'onde porteuse supplémentaire par les signaux de communication initialement destinés à moduler l'onde porteuse à laquelle elle se substitue et de moyens pour injecter les ondes modulées dans la fibre qui sont équipés pour injecter ladite onde porteuse supplémentaire dans la fibre avec les autres ondes porteuses, après modulation.

L'invention propose aussi un terminal de liaison de transmission optique par fibre véhiculant des signaux de communication par l'intermédiaire d'une pluralité d'ondes porteuses multiplexées en longueur d'onde dont les longueurs d'onde sont échelonnées entre deux extrêmes d'entre elles, ledit terminal comportant un équipement doté de moyens pour recevoir des signaux de communication transmis par la pluralité d'ondes porteuses prévues pour la fibre.

Selon une caractéristique de l'invention, ces moyens sont équipés pour recevoir au moins une onde porteuse supplémentaire dont la longueur d'onde est au delà de la zone délimitée par les dites longueurs d'onde extrêmes du même côté que l'une de ces deux longueurs d'onde extrêmes.

L'invention, ses caractéristiques et ses avantages sont précisés dans la description qui suit en liaison avec les figures évoquées ci-dessous.

La figure 1 présente un diagramme relatif à un exemple de répartition des puissances des ondes optiques appliquées par un équipement émetteur en entrée d'une liaison optique WDM.

La figure 2 présente un diagramme de répartition des puissances obtenues par un équipement récepteur en sortie de la liaison optique WDM envisagée pour la figure 1 lorsque les puissances des ondes optiques appliquées en entrée de cette liaison sont celles illustrées sur cette figure 1.

La figure 3 présente un diagramme relatif à un second exemple de répartition des puissances des ondes optiques appliquées par un équipement émetteur en entrée d'une liaison optique WDM.

La figure 4 présente un diagramme de répartition des puissances obtenues par un équipement récepteur en sortie de la liaison optique WDM envisagée pour la figure 3 lorsque les puissances des ondes optiques appliquées en entrée de cette liaison sont celles illustrées sur cette figure 3.

La figure 5 présente un diagramme représentatif montrant la dégradation du rapport signal sur bruit en fonction du niveau de préaccentuation appliqué à un signal optique. La figure 6 présente un diagramme relatif à un exemple de répartition des puissances des ondes optiques initialement obtenues au niveau d'un équipement récepteur placé en sortie d'une liaison optique WDM.

La figure 7 présente un diagramme relatif à un exemple de répartition des puissances des ondes optiques obtenues au niveau d'un équipement récepteur placé en sortie de la liaison optique WDM envisagée en liaison avec la figure 7, lorsque cette liaison a vieilli.

La figure 8 présente un schéma de principe relatif à une liaison de transmission par fibre.

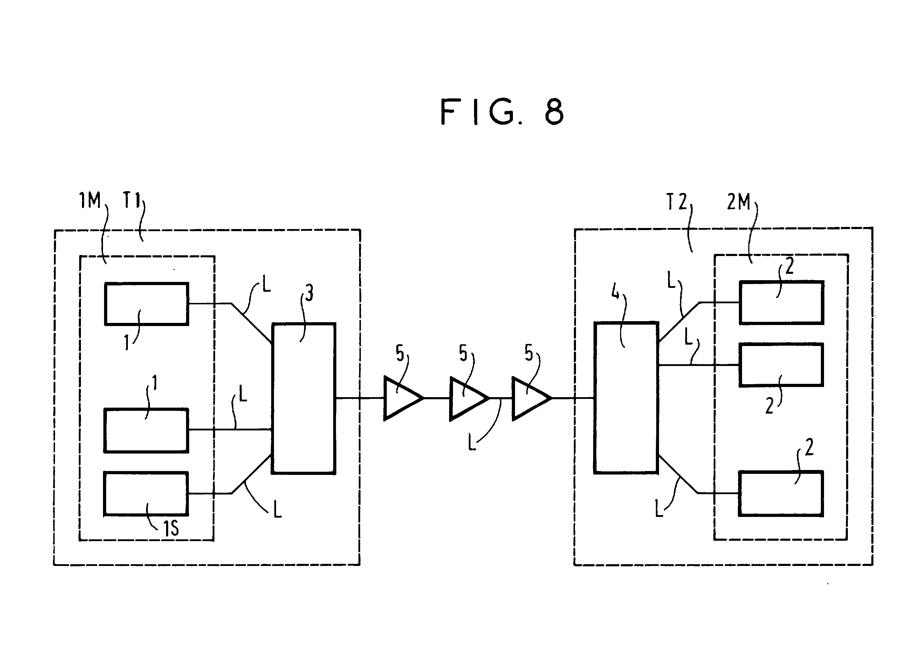

La liaison optique L schématisée en figure 8 est de type WDM. Elle est destinée à permettre la transmission de signaux de communication répartis sur une pluralité d'ondes porteuses optiques, de longueurs d'onde voisines, que ces signaux modulent. Ces ondes porteuses optiques ont par exemple des longueurs d'onde qui correspondent à celles dont les puissances sont illustrées sur la figure 7.

Cette liaison L fait par exemple partie d'un réseau de transmission dont seuls deux équipements terminaux T1 et T2, auxquels la liaison L aboutit, ont été représentés. Elle comporte classiquement une succession d'amplificateurs optiques 5 disséminés sur sa longueur.

L'équipement T1 comporte un ensemble 1M d'équipements émetteurs 1 auxquels un équipement émetteur de secours 1S est associé. Chacun de ces émetteurs est apte à fournir une onde porteuse de longueur d'onde déterminée à une entrée distincte d'un coupleur optique 3, de type à N entrées et une sortie. Cette dernière est reliée à une des extrémités de la liaison optique de transmission L.;

L'équipement T2 comporte un ensemble 2M d'équipements récepteurs 2 reliés aux sorties d'un coupleur optique 4, de type à une entrée et N sorties, dont l'entrée est reliée à l'autre des extrémités de la liaison L.

Dans la réalisation envisagée, l'équipement émetteur 1S est un équipement de secours apte a produire une onde porteuse dont la longueur d'onde est par exemple de 1553 nm, cette onde étant représentée en traits pointillés sur la figure 7. La pluralité d'ondes porteuses normalement destinées à être exploitées avec la liaison L présente des longueurs d'onde qui sont échelonnées entre les valeurs extrêmes de 1554 nm et 1561 nm dans l'exemple présenté sur les figures 7 et 8. L'onde porteuse supplémentaire de 1553 nm qu'est apte à fournir l'équipement émetteur de secours 1S est disposée en dehors de la zone délimitée par les valeurs extrêmes, la différence entre sa longueur d'onde et celle de la valeur extrême la plus proche étant ici choisie égale à la différence entre les longueurs d'onde successives voisines de deux quelconques des ondes de ladite pluralité.

Si l'onde porteuse dont la longueur d'onde est de 1561 nm voit sa puissance s'affaiblir lorsque la liaison L est en exploitation, par exemple pour des raisons liées au vieillissement de la liaison, et que le rapport signal sur bruit qui lui correspond atteint un niveau inférieur à un seuil d'exploitation prédéterminé, il est prévu d'arrêter l'exploitation de cette onde porteuse pour la transmission de signaux de communication. Le flot de signaux de communication exploité jusqu'alors pour moduler cette onde porteuse à des fins de transmission via la liaison L est alors exploité pour moduler l'onde porteuse de secours au niveau du terminal T1.

Dans la mesure où cela s'avérerait nécessaire, il est aussi possible de prévoir la génération d'une onde porteuse de secours dont la longueur d'onde est supérieure à la longueur d'onde la plus grande de la pluralité, soit 1561 nm dans les exemples présentés en figure 1 et 3. Une telle onde porteuse de secours permet alors de compenser les altérations qui viendraient principalement affecter les caractéristiques de puissance pour les ondes porteuses dont les longueurs d'onde sont les plus courtes d'une pluralité d'ondes porteuses telles que présentées sur ces figures 1 et 3. Elle pourrait alors se substituer à l'onde porteuse de longueur d'onde 1554 nm, si le rapport signal sur bruit de cette dernière était devenu insuffisant.

Les équipements des terminaux T1 et T2 doivent être complétés pour pouvoir permettre l'exploitation d'au moins une onde porteuse en plus.

Comme il est connu, le terminal T1 comporte un équipement d'émission ayant des moyens, de type source par exemple des diodes laser, lui permettant de générer les différentes ondes porteuses normalement exploitées. Ces moyens doivent aussi être équipés d'une source supplémentaire pour générer l'onde porteuse de secours avec une longueur d'onde qui se situe au delà des limites de la zone où se trouvent les longueurs d'onde de la pluralité d'ondes porteuses initialement exploitées pour la transmission de signaux de communication par la liaison L.

De même le terminal T1 comporte des moyens connus en eux-mêmes pour moduler les ondes porteuses qui sont initialement exploitées. Il doit comporter également des moyens pour moduler l'onde porteuse supplémentaire exploitée en secours. La modulation s'effectue dans ce cas au moyen des signaux de communication initialement destinés à moduler l'onde porteuse défaillante à laquelle l'onde porteuse supplémentaire de secours est substituée. Le terminal T1 doit également comporter des moyens, par exemple de type coupleur optique, qui permettent l'injection de cette onde porteuse supplémentaire.

Le terminal T2 doit disposer dee moyens récepteurs de signaux de communication qui permettent de prendre en compte au moins une onde porteuse supplémentaire en plus des ondes porteuses normalement exploitées. Ces moyens, connus en eux-mêmes, étant destinés à assurer la restitution des signaux de communication ayant modulé les ondes porteuses exploitées quelles que soient les longueurs d'onde concernées.

## Revendications

1. Procédé pour compenser les altérations venant affecter au cours du temps les caractéristiques et notamment les caractéristiques de puissance d'une liaison de transmission par fibre optique véhiculant des signaux de communication par l'intermédiaire d'une pluralité d'ondes optiques porteuses multiplexées en longueur d'onde, dont les longueurs d'onde sont échelonnées entre deux extrêmes d'entre elles, caractérisé en ce qu'il prévoit la possibilité de mise en oeuvre d'au moins une onde optique porteuse de secours dont la longueur d'onde est au delà de la zone délimitée par les dites longueurs d'onde extrêmes du même côté que l'une de ces deux longueurs d'onde extrêmes pour pouvoir se substituer à l'autre de ces deux longueurs d'onde extrêmes.

2. Procédé selon la revendication 1, caractérisé en ce qu'il prévoit la possibilité de mise en oeuvre d'au moins une onde optique porteuse de secours dont la longueur d'onde est inférieure à la longueur d'onde la plus courte de la pluralité d'ondes optiques porteuses exploitées par la liaison.

3. Terminal de liaison de transmission optique par fibre véhiculant des signaux de communication par l'intermédiaire d'une pluralité d'ondes porteuses multiplexées en longueur d'onde dont les longueurs d'onde sont échelonnées entre deux extrêmes d'entre elles, ledit terminal comportant un équipement d'émission doté de moyens pour générer les ondes porteuses de ladite pluralité, de moyens pour moduler chacune de ces ondes porteuses par des signaux de communication et de moyens pour injecter chacune des ondes porteuses modulées dans la fibre, caractérisé en ce qu'il comporte des moyens pour générer les ondes porteuses qui sont équipés pour générer au moins une onde porteuse supplémentaire dont la longueur d'onde se situe delà de la zone délimitée par les dites longueurs d'onde extrêmes de la pluralité du même côté que l'une de ces deux longueurs d'onde extrêmes pour permettre que cette onde porteuse supplémentaire puisse être substituée à l'autre de ces deux longueurs d'onde extrêmes, des moyens pour moduler les ondes porteuses qui sont équipés pour moduler l'onde porteuse supplémentaire par les signaux de communication initialement destinés à moduler l'onde porteuse à laquelle elle se substitue et des moyens pour injecter les ondes modulées dans la fibre qui sont équipés pour injecter ladite onde porteuse supplémentaire dans la fibre avec les autres ondes porteuses, après modulation.

4. Terminal de liaison de transmission optique par fibre véhiculant des signaux de communication par l'intermédiaire d'une pluralité d'ondes porteuses multiplexées en longueur d'onde dont les longueurs d'onde sont échelonnées entre deux extrêmes d'entre elles, ledit terminal comportant un équipement doté de moyens pour recevoir des signaux de communication transmis par la pluralité d'ondes porteuses prévues pour la fibre et étant caractérisé en ce que les moyens pour recevoir qu'il comporte sont équipés pour prendre en compte au moins une onde porteuse supplémentaire dont la longueur d'onde est au delà de la zone délimitée par les dites longueurs d'onde extrêmes du même côté que l'une de ces deux longueurs d'onde extrêmes.
